# EUROPEAN PATENT APPLICATION

(11) **EP 4 542 010 A1**
(43) Date of publication of application: **23.04.2025**
(21) Application number: 23204565.8
(22) Date of filing: 19.10.2023
(51) Int. Cl.: F01D 25/30, F01N 3/08, F01N 3/20, F02B 37/00

(54) **TURBINE ARRANGEMENT, TURBO DEVICE, INTERNAL COMBUSTION ENGINE, AND VEHICLE**

(71) Applicant: Scania CV AB, 151 87 Södertälje (SE)
(72) Inventor: OLSSON, Viktor, 121 48 Johanneshov (SE); LINDGREN, Magnus, 125 34 Älvsjö (SE); ÖQVIST, Disa, 117 58 Stockholm (SE); THELIN, Fredrik, 151 39 Södertälje (SE)
(74) Representative: Scania CV AB

(57) **Abstract**

A turbine arrangement (1, 1') for a turbo device (30) of an internal combustion engine (40) is disclosed. The turbine arrangement (1, 1') comprises a turbine housing (51), a turbine unit (19), a diffuser pipe assembly (5, 5') arranged in the turbine housing (51), and an exhaust additive dosing unit (6) arranged in the diffuser pipe assembly (5, 5'). The diffuser pipe assembly (5, 5') comprises a first diffuser member (m1) and a second diffuser member (m2, M2) arranged at least partially inside the first diffuser member (m1) such that a gap (8, 8') is formed between the first and second diffuser members (m1, m2, M2). The gap (8, 8') is configured to conduct flow of exhaust gas exiting a turbine outlet (9) of the turbine unit (19). The present disclosure further relates to a turbo device (30) for an internal combustion engine (40), an internal combustion engine (40), and a vehicle (2) comprising an internal combustion engine (40).

## Description

### TECHNICAL FIELD

The present disclosure relates to a turbine arrangement for a turbo device of an internal combustion engine. The present disclosure further relates to a turbo device for an internal combustion engine, an internal combustion engine comprising a turbo device, and a vehicle comprising an internal combustion engine.

### BACKGROUND

Turbo devices are used on internal combustion engines to increase performance and/or fuel efficiency of the engine. One type of turbo device is a turbocharger. A turbocharger comprises a turbine unit and a compressor, wherein the turbine unit is driven by exhaust gas of the engine to power the compressor. The compressor forces air to an air inlet of the engine which allows more fuel to be added and hence higher power output of the engine. A turbocharger is an efficient means of supercharging an engine since it utilizes energy of the exhaust gasses of the engine to compress the inlet air.

Another type of turbo device is a turbo compound. A turbo compound also comprises a turbine unit driven by exhaust gas of the engine. However, instead of powering a compressor, the energy recovered from the exhaust gasses is sent to an output shaft of the engine or is used for another purpose, such as powering an electric generator. The produced electricity can be used to produce motive power to the vehicle in an electric machine or can be used to power one or more other subsystems of the vehicle. A turbo compound is an efficient means of increasing the total fuel efficiency since it is capable of converting part of the energy of the exhaust gases into useful energy.

Environmental concerns, as well as emissions standards for motor vehicles, have led to the development of engines using exhaust additives, such as reducing agents for diesel, and/or ethanol, exhaust gases. Reducing agents may comprise an aqueous urea solution and may be used as a consumable in a Selective Catalytic Reduction SCR in order to lower nitrogen oxides NOx concentration in exhaust emissions from the internal combustion engine. A Selective Catalytic Reduction SCR system is a type of engine exhaust catalyst arrangement configured to convert the nitrogen oxides of exhaust gases into diatomic nitrogen and water using a reduction agent. Typically, the exhaust additive is injected directly upstream of an SCR catalyst.

Utilizing exhaust additives encompasses several problems and design complexities. In order to produce the quantities of ammonia required to reduce substantially all NOx, large quantities of urea solution usually must be injected into the exhaust stream. High temperatures are needed to evaporate the exhaust additive. Moreover, the temperature needed for evaporation depends on the injected mass flow of exhaust additive: the greater the mass flow, the higher the temperature required. Exhaust additives can be corrosive and can damage components of the exhaust system if not thoroughly evaporated. Moreover, the reduction efficiency of the exhaust additive is significantly reduced if the exhaust additive is not fully evaporated.

A further problem with the use of exhaust additives is the requirement for efficient mixing in order to achieve uniform distribution of exhaust additive over the entire surface area of a SCR catalyst substrate. The space available for mixing is limited and the exhaust additive is commonly injected into the exhaust stream shortly upstream of the SCR catalyst substrates. Attempts have been made to improve mixing of exhaust additives by providing injection of the exhaust additive further upstream in the exhaust system, for example in conjunction with a turbine unit arranged in the exhaust system. One such exhaust additive distribution device is described in the document WO 2018080371 A1. The device described therein is capable of adding exhaust additive to the exhaust stream in an efficient manner. However, in view of the solution presented in the document WO 2018080371 A1, there is room for improvement regarding evaporation performance of exhaust additive.

One type of solution for providing temperatures needed for an efficient evaporation of exhaust additive could be to implement a heater configured to heat a surface being in heat exchanging contact with the steam of exhaust gasses through an exhaust system. However, such types of solutions increase the complexity and costs of the system, and in general, it is an advantage if products, such as internal combustion engines and associated components, systems, and arrangements, have conditions and/or characteristics suitable for being manufactured and assembled in a cost-efficient manner.

### SUMMARY

It is an object of the present invention to overcome, or at least alleviate, at least some of the above-mentioned problems and drawbacks. The object is achieved by the subject-matter of the appended independent claim(s).

According to a first aspect of the present disclosure, the object is achieved by a turbine arrangement for a turbo device of an internal combustion engine, wherein the turbine arrangement comprises a turbine housing, a turbine unit arranged to rotate in the turbine housing, a diffuser pipe assembly arranged in the turbine housing, and an exhaust additive dosing unit arranged in the diffuser pipe assembly. The diffuser pipe assembly comprises a first diffuser member and a second diffuser member, wherein the second diffuser member is arranged at least partially inside the first diffuser member such that a gap is formed between the first and second diffuser members, wherein the gap is configured to conduct flow of exhaust gas exiting a turbine outlet of the turbine unit.

Since the gap between the first and second diffuser members is configured to conduct flow of exhaust gas exiting the turbine outlet of the turbine unit, a turbine arrangement is provided in which an inner surface of the second diffuser member is heated in an efficient manner by the flow of exhaust gas through the gap.

In other words, due to the flow of exhaust gas through the gap during operation of the turbine arrangement, the inner surface of the second diffuser member becomes hotter than would be the case without the flow of exhaust gas through the gap between the first and second diffuser members.

In this manner, exhaust additive added to the stream of exhaust gas by the exhaust additive dosing unit arranged in the diffuser pipe assembly can be evaporated in a more efficient manner. Moreover, due to the features of the turbine arrangement, conditions are provided for a compact and energy efficient solution for heating the inner surface of the second diffuser member circumventing the need of implementing a heater, or the like, for heating a part of an exhaust system of an engine.

Accordingly, a turbine arrangement is provided capable of improving the evaporation performance of exhaust additive without significantly adding costs or complexity to the turbine arrangement.

Accordingly, a turbine arrangement is provided overcoming, or at least alleviating, at least some of the above-mentioned problems and drawbacks. As a result, the above-mentioned object is achieved.

Optionally, an inlet portion of the gap faces the turbine outlet. Thereby, a constant flow of exhaust gas can be ensured through the gap in a direction from the inlet portion towards an outlet portion of the gap during operation of the turbine arrangement. As a further result, an efficient heating of the inner surface of the second diffuser member can be further ensured during operation of the turbine arrangement to thereby further ensure an efficient evaporation of exhaust additive added to the stream of exhaust gas by the exhaust additive dosing unit.

Optionally, an inlet portion of the gap is annular. Thereby, conditions are provided for a compact turbine arrangement capable of improving the evaporation performance of exhaust additive without significantly adding costs or complexity to the turbine arrangement.

Optionally, each of the first and second diffuser members is frusto-conical. Thereby, a diffuser pipe assembly is provided capable of converting kinetic energy of exhaust gas into pressure energy in an efficient manner, thereby improving the turbine efficiency and facilitating smoother flow into an exhaust system, thus aiding overall performance and efficiency of the turbine arrangement.

Optionally, the cross sectional area of the gap increases along an intended flow direction of exhaust gas through the gap. Thereby, a constant flow of exhaust gas can be further ensured through the gap in a direction from the inlet portion towards an outlet portion of the gap during operation of the turbine arrangement. As a further result, an efficient heating of the inner surface of the second diffuser member can be further ensured during operation of the turbine arrangement to thereby further maintain an efficient evaporation of exhaust additive added to the stream of exhaust gas by the exhaust additive dosing unit. Moreover, the increasing cross sectional area of the gap along the intended flow direction of exhaust gas through the gap provides a diffusing effect for the exhaust gas flowing through the gap.

Optionally, a first end portion of the diffuser pipe assembly adjoins the turbine outlet of the turbine unit. Thereby, it is ensured that hot exhaust gas is entering the diffuser pipe assembly during operation of the turbine arrangement. As a further result, an efficient evaporation of exhaust additive can be further ensured inside the diffuser pipe assembly.

Optionally, a first end portion of the first diffuser member is sealingly connected to a wall of the turbine housing such that all exhaust gas exiting the turbine outlet is conducted through an inner volume of the first diffuser member and part of the exhaust gas from the turbine outlet is conducted through an inner volume of the second diffuser member. Thereby, conditions are provided for a compact and energy efficient solution for heating the inner surface of the second diffuser member to thereby improve the evaporation performance of exhaust additive without significantly adding costs or complexity to the turbine arrangement.

As understood from the definitions above, since the second diffuser member is arranged at least partially inside the first diffuser member, the inner volume of the first diffuser member contains the gap, wall sections of the second diffuser member, as well as at least part of the inner volume of the second diffuser member.

Moreover, as understood from the above described, according to embodiments herein, the turbine arrangement is configured such that exhaust gas exiting the turbine outlet is directed into a first flow passing through the inner volume of the second diffuser member and a second flow passing through the gap between the first and second diffuser members. The second flow passing through the gap further heats the inner surface of the second diffuser member which ensures an efficient evaporation rate of the exhaust additive supplied by the exhaust additive dosing unit, as is explained herein.

Optionally, the cross sectional area of the gap is smaller than a cross sectional area of the second diffuser member. Thereby, it can be ensured that a smaller portion of the flow exiting the turbine outlet of the turbine unit is directed through the gap while a larger portion of the flow exiting the turbine outlet is directed through the inner volume of the second diffuser member. In this manner, an efficient heating of the inner surface of the second diffuser member can be ensured while preserving a high operational efficiency of the turbine arrangement.

Optionally, the diffuser pipe assembly comprises a first and a second end portion, and wherein the exhaust additive dosing unit is arranged to supply the exhaust additive at a position closer to the first end portion than to the second end portion. Thereby, the heating of the inner surface of the second diffuser member can be utilized along a significant length of the diffuser pipe assembly to improve vaporization of exhaust additive added by the exhaust additive dosing unit.

Optionally, the turbine arrangement comprises a distribution device arranged on the turbine unit, and wherein the exhaust additive dosing unit is arranged to supply an exhaust additive onto the distribution device. Thereby, the exhaust additive supplied to the distribution device is dispersed into the exhaust stream, utilizing the centrifugal force of the rotating distribution device. The substantial kinetic energy delivered to the dosed exhaust additive, combined with the high temperatures and turbulent flow at the turbine outlet, ensures highly effective mixing of the exhaust additive into the stream of exhaust gas. Consequently, this facilitates highly efficient evaporation of the exhaust additive.

According to a second aspect of the present disclosure, the object is achieved by a turbo device for an internal combustion engine, wherein the turbo device comprises a turbine arrangement according to some embodiments of the present disclosure, and wherein the turbine unit of the turbine arrangement is configured to be driven by exhaust gas of the internal combustion engine.

Since the turbo device comprises a turbine arrangement according to some embodiments, a turbo device is provided overcoming, or at least alleviating, at least some of the above-mentioned problems and drawbacks. As a result, the above-mentioned object is achieved.

According to a third aspect of the present disclosure, the object is achieved by an internal combustion engine comprising a turbo device according to some embodiments of the present disclosure.

Since the internal combustion engine comprises a turbo device according to some embodiments, an internal combustion engine is provided overcoming, or at least alleviating, at least some of the above-mentioned problems and drawbacks. As a result, the above-mentioned object is achieved.

According to a fourth aspect of the present disclosure, the object is achieved by a vehicle comprising an internal combustion engine according to some embodiments of the present disclosure.

Since the vehicle comprises an internal combustion engine according to some embodiments, a vehicle is provided overcoming, or at least alleviating, at least some of the above-mentioned problems and drawbacks. As a result, the above-mentioned object is achieved.

Optionally, the vehicle is a heavy road vehicle, such as a truck or a bus. Thereby, a heavy road vehicle is provided having at least some of the above-mentioned advantages.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 schematically illustrates a vehicle according to some embodiments,
Fig. 2 schematically illustrates an internal combustion engine of the vehicle illustrated in Fig. 1,
Fig. 3 illustrates a cross section of a turbine arrangement according to some embodiments, and
Fig. 4 illustrates a cross section of a turbine arrangement according to some further embodiments.

### DETAILED DESCRIPTION

Aspects of the present disclosure will now be described more fully. Like reference signs refer to like elements throughout. Well-known functions or constructions will not necessarily be described in detail for brevity and/or clarity.

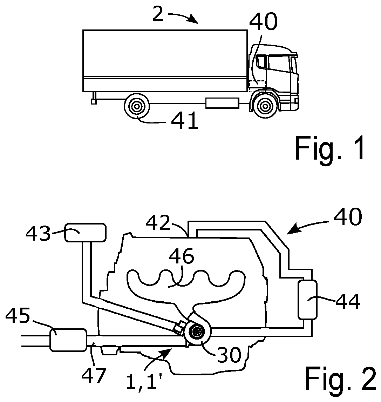

**Fig. 1** schematically illustrates a vehicle 2 according to some embodiments of the present disclosure. According to the illustrated embodiments, the vehicle 2 is a truck, i.e. a type of heavy road vehicle. However, according to further embodiments, the vehicle 2, as referred to herein, may be another type of manned or unmanned vehicle for land or water based propulsion such as a lorry, a bus, a construction vehicle, a tractor, a car, a ship, a boat, or the like.

The vehicle 2 comprises an internal combustion engine 40. According to the illustrated embodiments, the internal combustion engine 40 is configured to provide motive power to the vehicle 2 via wheels 41 of the vehicle 2.

**Fig. 2** schematically illustrates the internal combustion engine 40 of the vehicle 2 illustrated in Fig. 1. According to the illustrated embodiments, the internal combustion engine 40 is a diesel engine, i.e. a type of compression ignition engine. The internal combustion engine 40 may thus be configured to operate on diesel or a diesel-like fuel, such as biodiesel, biomass to liquid (BTL), or gas to liquid (GTL) diesel. Diesel-like fuels, such as biodiesel, can be obtained from renewable sources such as vegetable oil which mainly comprises fatty acid methyl esters (FAME). Diesel-like fuels can be produced from many types of oils, such as rapeseed oil (rapeseed methyl ester, RME) and soybean oil (soy methyl ester, SME).

According to further embodiments, the internal combustion engine 40, as referred to herein, may an Otto engine with a spark-ignition device, wherein the Otto engine may be configured to run on petrol, alcohol, similar volatile fuels, or combinations thereof. Alcohol, such as ethanol, can be derived from renewable biomass. According to embodiments herein, the internal combustion engine 40 is a four-stroke internal combustion engine 40.

For reasons of brevity and clarity, the internal combustion engine 40 is in some places herein referred to as the combustion engine 40, or simply the engine 40. According to some embodiments, the combustion engine 40, as referred to herein, may be configured to power another type of unit than a vehicle, such as for example an electric generator.

The combustion engine 40 comprises a turbo device 30. As is further explained herein, the turbo device 30 comprises a turbine unit configured to be driven by exhaust gas of the internal combustion engine 40. According to the illustrated embodiments, the turbo device 30 is a turbocharger, i.e. a charging device configured to compress air to an air inlet 42 of the combustion engine 40. Thus, according to these embodiments, the turbine unit of the turbo device 30 is connected to the compressor. According to further embodiments, the turbo device 30, as referred to herein, may be a turbo compound device wherein the turbine unit is connected to an output shaft of the combustion engine 40 or to another shaft or type of device configured to produce useful energy by the rotation of the turbine unit.

According to the illustrated embodiments, the combustion engine 40 comprises an air filter unit 43 and a charge air cooler 44. The compressor of the turbo device 30 is configured to force air from the air filter unit 43 to the air inlet 42 of the engine 40. The charge air cooler 44 is arranged between the compressor of the turbo device 30 and the air inlet 42 of the combustion engine 40. The charge air cooler 44 is configured to cool the compressed air before the air is conducted to the air inlet 42. In this manner, the power output and fuel efficiency of the combustion engine 40 can be improved.

Moreover, according to the illustrated embodiments, the combustion engine 40 comprises a Selective Catalytic Reduction SCR catalyst 45 and an exhaust conduit 47 connecting a turbine outlet of the turbine unit of the turbo device 30 to the Selective Catalytic Reduction SCR catalyst 45 as is further explained below.

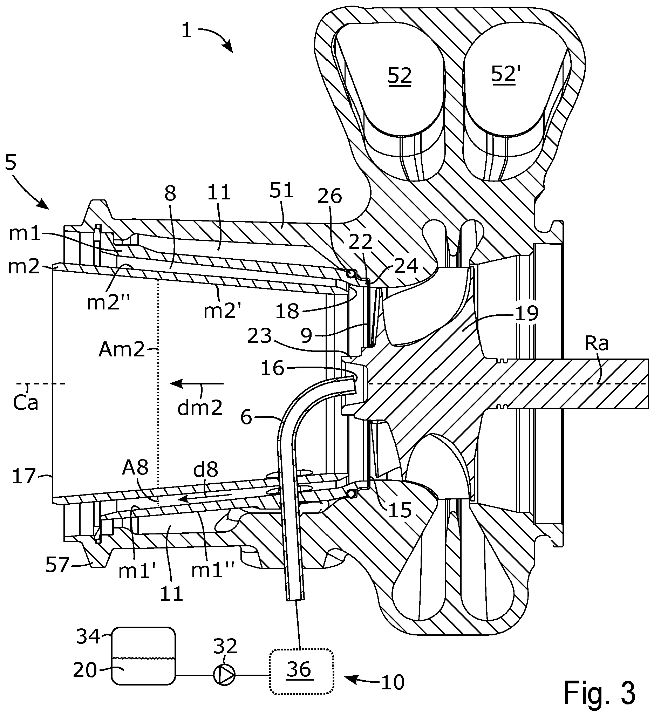

**Fig. 3** illustrates a cross section of a turbine arrangement 1 according to some embodiments. The turbine arrangement 1 is a turbine arrangement for a turbo device of an internal combustion engine. In other words, as indicated in Fig. 1 and Fig. 2, the turbo device 30 of the internal combustion engine 40 of the vehicle 2 may comprise a turbine arrangement 1 according to the embodiments illustrated in Fig. 3. Below, simultaneous reference is made to Fig. 1 - Fig. 3, if not indicated otherwise.

The turbine arrangement 1 comprises a turbine housing 51 and a turbine unit 19 arranged to rotate in the turbine housing 51 around a rotation axis Ra during operation of the turbine arrangement 1. In Fig. 3, the cross section is made in a plane comprising the rotation axis Ra of the turbine unit 19. The turbine unit 19 is configured to be driven by exhaust gas of an internal combustion engine, such as the combustion engine 40 illustrated in Fig. 2. The turbine arrangement 1 may form part of turbo device in the form of a turbocharger or a turbo device in the form of a turbo compound device.

According to the illustrated embodiments, the turbine housing 51 comprises a twin scroll volute 52, 52'. The twin scroll volute 52, 52' may also be referred to as a twin scroll turbine volute. The twin scroll volute 52, 52' is fluidly connected to an exhaust manifold of a combustion engine, such as the exhaust manifold 46 of the combustion engine 40 illustrated in Fig. 2. The flow of exhaust gas from the twin scroll volute 52, 52' through the turbine unit 19 causes rotation of the turbine unit 19 around the rotation axis Ra. According to further embodiments, the turbine arrangement 1 may comprise another type of volute, such as a single scroll volute.

The turbine arrangement 1 further comprises a diffuser pipe assembly 5 arranged in the turbine housing 51. The diffuser pipe assembly 5 is connected to a turbine outlet 9 of the turbine unit 19 and is configured to receive exhaust gas therefrom. Moreover, according to the illustrated embodiments, the turbine arrangement 1 is configured such that a centre axis Ca of the diffuser pipe assembly 5 coincides with the rotation axis Ra of the turbine unit 19.

The turbine housing 51 comprises a flange 57 for the connection of an exhaust conduit, such as the exhaust conduit 47 of the combustion engine 40 illustrated in Fig. 2.

The diffuser pipe assembly 5 comprises a first diffuser member m1 and a second diffuser member m2. According to the illustrated embodiments, the second diffuser member m2 is arranged partially inside the first diffuser member m1 such that a gap 8 is formed between the first and second diffuser members m1, m2. According to the illustrated embodiments, approximately 87% of the second diffuser member m2 is enclosed by the first diffuser member m1. In other words, according to the illustrated embodiments, approximately 87% of the second diffuser member m2 is arranged inside the first diffuser member m1. According to further embodiments, more than 50%, or more than 70%, of the second diffuser member m2 may be enclosed by the first diffuser member m1.

Moreover, according to the illustrated embodiments, the entire first diffuser member m1 is enclosed by the turbine housing 51, wherein a small part of the second diffuser member m2 is arranged outside of the turbine housing 51. According to further embodiments, the entire second diffuser member m2 may be enclosed by the turbine housing 51. As an alternative, or in addition, only part of the first diffuser member m1 may be enclosed by the turbine housing 51.

Moreover, as can be seen in Fig. 3, the turbine arrangement 1 comprises an exhaust additive dosing unit 6 arranged inside the diffuser pipe assembly 5. According to the illustrated embodiments, the exhaust additive dosing unit 6 is formed as a supply tube protruding through walls of the turbine housing 51 and the first and second diffuser members m1, m2. The exhaust additive dosing unit 6 as referred to herein may also be referred to as an exhaust additive dosing pipe. The exhaust additive dosing unit 6 comprises an open end 16 positioned inside the diffuser pipe assembly 5. In more detail, according to the illustrated embodiments, the exhaust additive dosing unit 6 is arranged such that a centre axis Ca of the diffuser pipe assembly 5 extends through the open end 16 of the exhaust additive dosing unit 6.

The exhaust additive dosing unit 6 is configured to supply an exhaust additive 20, such as an aqueous urea solution, to exhaust gas flowing through the diffuser pipe assembly 5. The exhaust additive dosing unit 6 is connected to an exhaust additive dosing arrangement 10. The turbine arrangement 1, as referred to herein, may comprise at least part of the exhaust additive dosing arrangement 10.

According to the illustrated embodiments, the exhaust additive dosing arrangement 10 is an airless exhaust additive dosing arrangement 10 meaning that the exhaust additive dosing arrangement 10 is configured to pump exhaust additive 20 using a pump 32 instead of using compressed air as some other types of exhaust additive dosing arrangements. In more detail, according to the illustrated embodiments, the exhaust additive dosing arrangement 10 comprises an exhaust additive storage unit 34 configured to accommodate exhaust additive 20 and a pump 32 configured to pump exhaust additive 20 from the exhaust additive storage unit 34 to the open end 16 of the exhaust additive dosing unit 6. Moreover, the exhaust additive dosing arrangement 10 may comprise some further components 36 between the pump 32 and the exhaust additive dosing unit 6. In Fig. 3, such further components 36 are indicated with the reference sign 36 and may comprise further tubing, a dosing valve, and the like components.

According to embodiments herein, the internal combustion engine 40 is a compression ignition engine and the exhaust additive dosing unit 6 is configured to supply an aqueous urea solution to exhaust gas flowing through the diffuser pipe assembly 5. As indicated in Fig. 2, the combustion engine 40 may comprise a Selective Catalytic Reduction SCR catalyst 45 arranged downstream of the turbo device 30 and thus also downstream of the turbine outlet assembly 1. The SCR catalyst 45 may convert nitrogen oxides of exhaust gases into diatomic nitrogen and water using the exhaust additive 20 added to exhaust gas by the exhaust additive dosing unit 6.

The gap 8 formed between the first and second diffuser members m1, m2 is configured to conduct flow of exhaust gas exiting the turbine outlet 9 of the turbine unit 19. In this manner, a turbine arrangement 1 is provided in which an inner surface m2' of the second diffuser member m2 is heated in an efficient manner by the flow of exhaust gas through the gap 8 formed between the first and second diffuser members m1, m2.

In other words, due to the flow of exhaust gas through the gap 8 during operation of the turbine arrangement 1, the inner surface m2' of the second diffuser member m2 becomes hotter than would be the case without the flow of exhaust gas through the gap 8 between the first and second diffuser members m1, m2.

A hot inner surface m2' of the second diffuser member m2 can ensure that exhaust additive 20 added to the stream of exhaust gas by the exhaust additive dosing unit can be evaporated in a more efficient manner. Moreover, due to the features of the turbine arrangement 1, conditions are provided for a compact and energy efficient solution for heating the inner surface m2' of the second diffuser member m2. Accordingly, a turbine arrangement 1 is provided capable of improving the evaporation performance of exhaust additive without significantly adding costs or complexity to the turbine arrangement 1.

According to the illustrated embodiments, an inlet portion 18 of the gap 8 faces the turbine outlet 9. In this manner, a constant flow of exhaust gas can be ensured through the gap 8 in a direction d8 from the inlet portion 18 towards an outlet portion of the gap during operation of the turbine arrangement 1. Moreover, according to the illustrated embodiments, the inlet portion 18 of the gap 8 is annular. According to further embodiments, the inlet portion 18 of the gap 8 may have another shape, such as an oval shape.

As is seen in Fig. 3, according to the illustrated embodiments, each of the first and second diffuser members m1, m2 is frusto-conical. Therefore, each of the first and second diffuser members m1, m2 may be referred to as a diffusor cone. Moreover, according to the illustrated embodiments, the second diffuser member m2 is provided with a slightly smaller slant angle than the first diffuser member m1.

In more detail, according to the illustrated embodiments, the second diffuser member m2 has a slant angle of approximately 5 degrees whereas the first diffuser member m1 has a slant angle of approximately 6 degrees. According to further embodiments, the second diffuser member m2 may be provided with a slant angle within the range of 2 - 10 degrees, or within the range of 4 - 6 degrees, and the first diffuser member m1 may be provided with a slant angle within the range of 3 - 12 degrees, or within the range of 5 - 7 degrees. The slant angle of the first and second diffuser members m1, m2 can be measured between the centre axis Ca of the diffuser pipe assembly 5 and an outer or inner surface m1', m1", m2', m2" of the respective first and second diffuser member m1, m2.

The slightly smaller slant angle of the second diffuser member m2 as compared to the first diffuser member m1 causes the cross sectional area A8 of the gap 8 to increase along an intended flow direction d8 of exhaust gas through the gap 8. The increasing cross sectional area A8 of the gap 8 along the intended flow direction d8 further ensures a constant flow of exhaust gas through the gap 8 along the intended flow direction d8 during operation of the turbine arrangement 1. Moreover, the increasing cross sectional area A8 of the gap 8 along the intended flow direction d8 of exhaust gas through the gap 8 provides a diffusing effect for the exhaust gas flowing through the gap 8.

According to the illustrated embodiments, a first end portion 15 of the diffuser pipe assembly 5 adjoins the turbine outlet 9 of the turbine unit 19. The feature that the first end portion 15 of the diffuser pipe assembly 5 adjoins the turbine outlet 9 means that the first end portion 15 of the diffuser pipe assembly 5 is positioned in a manner where it is next to, immediately adjacent to, or in close proximity to, the turbine outlet 9 without necessarily being directly connected thereto.

As can be seen in Fig. 3, the diffuser pipe assembly 5 is configured to conduct exhaust gas in a direction from the first end portion 15 towards the second end portion 17 of the diffuser pipe assembly 5. The second end portion 17 is configured to be fluidly connected to an exhaust conduit, such as the exhaust conduit 47 of the internal combustion engine 40 illustrated in Fig. 2.

Moreover, according to the illustrated embodiments, a first end portion 22 of the first diffuser member m1 is sealingly connected to a wall 24 of the turbine housing 51. That is, in more detail, according to the embodiments illustrated in Fig. 3, the turbine arrangement 1 comprises a sealing 26 arranged in an interface between the first end portion 22 of the first diffuser member m1 and the wall 24 of the turbine housing 51.

According to the illustrated embodiments, the turbine arrangement 1 is configured such that all exhaust gas exiting the turbine outlet 9 is conducted through an inner volume of the first diffuser member m1 and part of the exhaust gas from the turbine outlet 9 is conducted through an inner volume of the second diffuser member m2.

As understood from these definitions, since the second diffuser member m2 is arranged at least partially inside the first diffuser member m1, the inner volume of the first diffuser member m1 contains the gap 8, wall sections of the second diffuser member m2, as well as part of the inner volume of the second diffuser member m2.

Moreover, as understood from the herein described, the turbine arrangement 1 is configured such that exhaust gas exiting the turbine outlet 9 is directed into a first flow passing through the inner volume of the second diffuser member m2 and a second flow passing through the gap 8 between the first and second diffuser members m1, m2. The second flow passing through the gap 8 heats the inner surface m2' of the second diffuser member m2 which ensures an efficient evaporation rate of the exhaust additive supplied by the exhaust additive dosing unit 6, as is explained herein.

According to the illustrated embodiments, the above-mentioned second flow is smaller than the above-mentioned first flow. This is partly due to the fact that the cross sectional area A8 of the gap 8 is smaller than a cross sectional area Am2 of the second diffuser member m2 according to the illustrated embodiments. However, according to further embodiments, the cross sectional area A8 of the gap 8 may be larger than the cross sectional area Am2 of the second diffuser member m2.

The cross sectional area A8 of the gap 8 can be measured in a plane perpendicular to an intended main flow direction through the gap 8, and/or in a plane perpendicular to the centre axis Ca of the diffuser pipe assembly 5. Likewise, the cross sectional area Am2 of the second diffuser member m2 can be measured in a plane perpendicular to an intended main flow direction dm2 through the second diffuser member m2, and/or in a plane perpendicular to the centre axis Ca of the diffuser pipe assembly 5.

The gap 8 between the first and second diffuser members m1, m2, as referred to herein, is defined by an outer surface m2" of the second diffuser member m2 and an inner surface m1' of the first diffuser member m1. Moreover, as can be seen in Fig. 3, according to the illustrated embodiments, the turbine arrangement 1 comprises a void space 11 between the turbine housing 51 and the first diffuser member m1, wherein an outer wall m1" of the first diffuser member m1 forms a delimiting surface of the void space 11. The void space provides an insulating effect of the outer wall m1" of the first diffuser member m1. In this manner, a hot inner surface m2' of the second diffuser member m2 can be further ensured during operation of the turbine arrangement 1 to thereby further ensure an efficient evaporation efficiency of the exhaust additive 20 supplied to the stream of exhaust gas through the diffuser pipe assembly 5 by the exhaust additive dosing unit 6.

As mentioned, the diffuser pipe assembly 5 is configured to conduct exhaust gas in a direction from the first end portion 15 towards the second end portion 17 of the diffuser pipe assembly 5. According to the illustrated embodiments, the exhaust additive dosing unit 6 is configured to supply an exhaust additive 20 to exhaust gas at a location closer to the first end portion 15 than the second end portion 17 of the diffuser pipe assembly 5. Thereby, the improved heating of the inner surface m2' of the second diffuser member m2 of the diffuser pipe assembly 5 can be utilized along a significant length of the diffuser pipe assembly 5 to improve vaporization of exhaust additive 20 added by the exhaust additive dosing unit 6.

According to the embodiments illustrated in Fig. 3, the turbine arrangement 1 comprises a distribution device 23 arranged on the turbine unit 19, wherein the exhaust additive dosing unit 6 is arranged to supply the exhaust additive 20 onto the distribution device 23. The distribution device 23 is arranged at a centre of the turbine unit 19 meaning that the rotational axis Ra of the turbine unit 19 extends through the distribution device 23. According to the illustrated embodiments, the distribution device 23 form part of the turbine unit 19, i.e. the distribution device 23 and the turbine unit 19 are formed by one piece of coherent material. According to further embodiments, the distribution device 23 may be a separate part attached to the turbine unit 19 for example by welding, clamping, and/or by one or more fastening elements.

According to the illustrated embodiments, the distribution device 23 is cup-shaped and the exhaust additive dosing unit 6 protrudes into an open face of the cup-shaped distribution device 23 such that the opening 16 of the exhaust additive dosing unit 6 is positioned inside the cup-shaped distribution device 23. Since the distribution device 23 corotates with the turbine unit 19 at high rotational speeds, an efficient distribution and atomisation of exhaust additive 20 is provided. In addition, the cup-shape of the distribution device 23 prevents back-flow from the cup rim and reduces the risk of exhaust additive being unintentionally deposited on surfaces of the turbine unit 19.

According to further embodiments of the herein described, the distribution device 23 may have another shape. As an example, according to some embodiments, the distribution device 23 may comprise a receiving surface forming a patterned facial surface. This patterned surface may be used to control and optimise the distribution of exhaust additive 20 in the exhaust stream. As an alternative, or in addition, the exhaust additive distribution device 23 may comprise a radial wall provided with a number of orifices extending between an inner face of the radial wall and an outer face of the radial wall. Such a solution resembles current production injector nozzles and thus such a distribution device may be obtained by adjustment of current production lines. Moreover, according to such embodiments, the distribution device 23 may comprise a mating surface with an exhaust additive dosing unit 6 for avoiding undesired leakage of the exhaust additive.

According to the illustrated embodiments, the second diffuser member m2 form part of the first diffuser member m1, i.e. the first and second diffuser members m1, m2 are formed by one piece of coherent material. In these embodiments, the second diffuser member m2 is linked to the first diffuser member m1 via a number of sections extending between the first and second diffuser members m1, m2. Such sections are neither seen nor indicated in Fig. 3. According to further embodiments, the second diffuser member m2 may be a separate part attached at least partially inside the first diffuser member m1 for example by welding, clamping and/or by using one or more fastening elements.

Moreover, according to the illustrated embodiments, the diffuser pipe assembly 5 is separate from the turbine housing 51, i.e., is a separate assembly arranged in the turbine housing 51. The diffuser pipe assembly 5 may be arranged in the turbine housing 51 using a number of fastening elements, and/or by using clamping or welding.

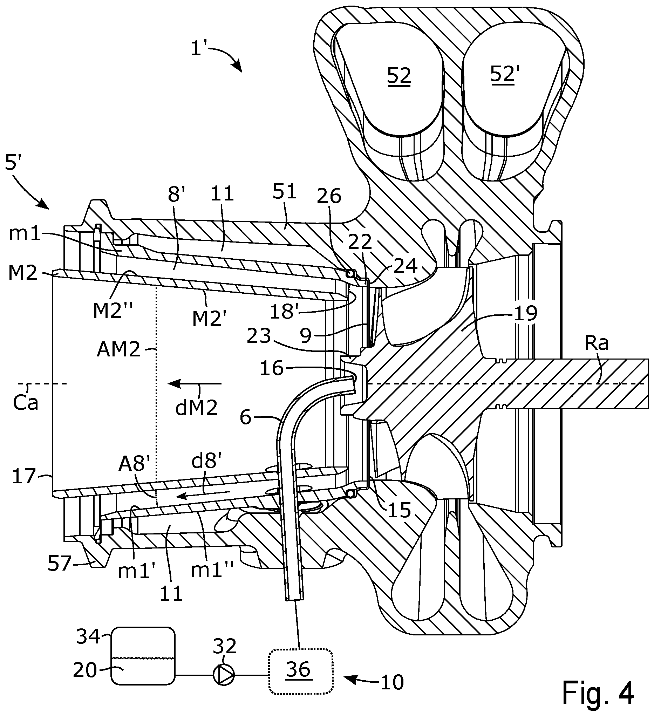

**Fig. 4** illustrates a cross section of a turbine arrangement 1' according to some further embodiments. Also in these embodiments, the turbine arrangement 1' is a turbine arrangement for a turbo device of an internal combustion engine. In other words, as indicated in Fig. 1 and Fig. 2, the turbo device 30 of the internal combustion engine 40 of the vehicle 2 may comprise a turbine arrangement 1' according to the embodiments illustrated in Fig. 4.

The turbine arrangement 1' according to the embodiments illustrated in Fig. 4 comprises the same features, functions, and advantages, as the turbine arrangement 1 explained with reference to Fig. 3, with some differences pointed out below. The shared features, functions, and advantages are not further explained herein for reasons of brevity and clarity. Below, simultaneous reference is made to Fig. 1 - Fig. 4, if not indicated otherwise.

The turbine arrangement 1' according to the embodiments illustrated in Fig. 4 comprises a diffuser pipe assembly 5' with a second diffuser member M2 having a smaller average diameter than the second diffuser member m2 of the diffuser pipe assembly 5 of the turbine arrangement 1 according to the embodiments illustrated in Fig. 3. However, the second diffuser member M2 of the diffuser pipe assembly 5' according to the embodiments illustrated in Fig. 4 comprises the same slant angle of approximately 5 degrees as the second diffuser member m2 according to the embodiments illustrated in Fig. 3. The first diffuser member m1 of the diffuser pipe assembly 5' according to the embodiments illustrated in Fig. 4 comprises the same layout as the first diffuser member m1 according to the embodiments illustrated in Fig. 3.

Accordingly, also in the embodiments illustrated in Fig. 4, the cross sectional area A8' of the gap 8' increases along an intended flow direction d8' of exhaust gas through the gap 8'. As above, the increasing cross sectional area A8' of the gap 8' along the intended flow direction d8' further ensures a constant flow of exhaust gas through the gap 8' along the intended flow direction d8' during operation of the turbine arrangement 1'. Moreover, as above, the increasing cross sectional area A8' of the gap 8' along the intended flow direction d8' of exhaust gas through the gap 8' provides a diffusing effect for the exhaust gas flowing through the gap 8'.

A difference between the embodiments illustrated in Fig. 4 and the embodiments illustrated in Fig. 3 is that the average cross sectional area of the gap 8' between the first and second diffuser members m1, M2 is greater in the embodiments illustrated in Fig. 4 as compared to the gap 8 between the first and second diffuser members m1, m2 in the embodiments illustrated in Fig. 3. Moreover, the size of the inlet portion 18, 18' of the gap 8, 8', which faces the turbine outlet 9, is larger in the embodiments illustrated in Fig. 4 as compared to the embodiments illustrated in Fig. 3.

Due to these features, a higher flowrate of exhaust gas is provided through the gap 8' of the embodiments according to Fig. 4 as compared to the flowrate of exhaust gas through the gap 8 according the embodiments according to Fig. 3, which further ensures a hot inner surface M2' of the second diffuser member M2.

Moreover, due to the larger size of the inlet portion 18' of the gap 8' according to the embodiments illustrated in Fig. 4, the kinetic energy of exhaust gas exiting the turbine outlet 9 can be utilized in a more effective manner for generating a continuous flow of exhaust gas along the intended flow direction d8' through the gap 8'.

Also in the embodiments illustrated in Fig. 4, the cross sectional area A8' of the gap 8' is smaller than a cross sectional area AM2 of the second diffuser member M2. However, also in these embodiments, the cross sectional area A8' of the gap 8' may be larger than the cross sectional area AM2 of the second diffuser member M2. The cross sectional area A8' of the gap 8' can be measured in a plane perpendicular to an intended main flow direction d8' through the gap 8', and/or in a plane perpendicular to the centre axis Ca of the diffuser pipe assembly 5'. Likewise, the cross sectional area AM2 of the second diffuser member M2 can be measured in a plane perpendicular to an intended main flow direction dM2 through the second diffuser member M2, and/or in a plane perpendicular to the centre axis Ca of the diffuser pipe assembly 5'.

Also in these embodiments, the gap 8' between the first and second diffuser members m1, M2 is defined by an outer surface M2" of the second diffuser member M2 and an inner surface m1' of the first diffuser member m1. Moreover, as can be seen in Fig. 4, also in these embodiments, the turbine arrangement 1' comprises a void space 11 between the turbine housing 51 and the first diffuser member m1, wherein an outer wall m1" of the first diffuser member m1 forms a delimiting surface of the void space 11.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A turbine arrangement (1, 1') for a turbo device (30) of an internal combustion engine (40), wherein the turbine arrangement (1, 1') comprises:
- a turbine housing (51),
- a turbine unit (19) arranged to rotate in the turbine housing (51),
- a diffuser pipe assembly (5, 5') arranged in the turbine housing (51), and
- an exhaust additive dosing unit (6) arranged in the diffuser pipe assembly (5, 5'),
wherein the diffuser pipe assembly (5, 5') comprises a first diffuser member (m1) and a second diffuser member (m2, M2), wherein the second diffuser member (m2, M2) is arranged at least partially inside the first diffuser member (m1) such that a gap (8, 8') is formed between the first and second diffuser members (m1, m2, M2),
and wherein the gap (8, 8') is configured to conduct flow of exhaust gas exiting a turbine outlet (9) of the turbine unit (19).

2. The turbine arrangement (1, 1') according to claim 1, wherein an inlet portion (18, 18') of the gap (8, 8') faces the turbine outlet (9).

3. The turbine arrangement (1, 1') according to claim 1 or 2, wherein an inlet portion (18, 18') of the gap (8, 8') is annular.

4. The turbine arrangement (1, 1') according to any one of the preceding claims, wherein each of the first and second diffuser members (m1, m2, M2) is frusto-conical.

5. The turbine arrangement (1, 1') according to any one of the preceding claims, wherein the cross sectional area (A8, A8') of the gap (8, 8') increases along an intended flow direction (d8, d8') of exhaust gas through the gap (8, 8').

6. The turbine arrangement (1, 1') according to any one of the preceding claims, wherein a first end portion (15) of the diffuser pipe assembly (5, 5') adjoins the turbine outlet (9) of the turbine unit (19).

7. The turbine arrangement (1, 1') according to any one of the preceding claims, wherein a first end portion (22) of the first diffuser member (m1) is sealingly connected to a wall (24) of the turbine housing (51) such that all exhaust gas exiting the turbine outlet (9) is conducted through an inner volume of the first diffuser member (m1) and part of the exhaust gas from the turbine outlet (9) is conducted through an inner volume of the second diffuser member (m2, M2).

8. The turbine arrangement (1, 1') according to any one of the preceding claims, wherein the cross sectional area (A8, A8') of the gap (8, 8') is smaller than a cross sectional area (Am2, AM2) of the second diffuser member (m2, M2).

9. The turbine arrangement (1, 1') according to any one of the preceding claims, wherein the diffuser pipe assembly (5, 5') comprises a first and a second end portion (15, 17), and wherein the exhaust additive dosing unit (6) is arranged to supply the exhaust additive (20) at a position closer to the first end portion (15) than to the second end portion (17).

10. The turbine arrangement (1, 1') according to any one of the preceding claims, wherein the turbine arrangement (1, 1') comprises a distribution device (23) arranged on the turbine unit (19), and wherein the exhaust additive dosing unit (6) is arranged to supply an exhaust additive (20) onto the distribution device (23).

11. A turbo device (30) for an internal combustion engine (40), wherein the turbo device (30) comprises a turbine arrangement (1, 1') according to any one of the preceding claims, and wherein the turbine unit (19) of the turbine arrangement (1, 1') is configured to be driven by exhaust gas of the internal combustion engine (40).

12. An internal combustion engine (40) comprising a turbo device (30) according to claim 11.

13. A vehicle (2) comprising an internal combustion engine (40) according to claim 12.

14. The vehicle (2) according to claim 13, wherein the vehicle (2) is a heavy road vehicle, such as a truck or a bus.
